(19) Europäisches Patentamt
European Patent Office
Office européen des brevets

(11) Publication number: **0 411 339 B1**

(12) # EUROPEAN PATENT SPECIFICATION

(45) Date of publication of patent specification: **14.09.94**

(51) Int. Cl.5: **C08K 5/16**, C08L 67/02, //(C08K5/16,5:29,5:3437)

(21) Application number: **90112877.7**

(22) Date of filing: **05.07.90**

(54) **Elastomeric thermoplastic copolyester compositions.**

(30) Priority: **05.07.89 IT 2109489**

(43) Date of publication of application: **06.02.91 Bulletin 91/06**

(45) Publication of the grant of the patent: **14.09.94 Bulletin 94/37**

(84) Designated Contracting States: **BE DE ES FR GB NL SE**

(56) References cited: **DE-A- 1 694 318**

(73) Proprietor: **ENICHEM S.p.A.**
**Piazza Repubblica, 16**
**I-20124 Milano (IT)**

(72) Inventor: **Chiolle, Antonio**
**156, Via Darsena**
**I-44100 Ferrara (IT)**
Inventor: **Maltoni, Gian Paolo**
**80, Via Garibaldi**
**I-44100 Ferrara (IT)**
Inventor: **Stella, Romolo**
**11, Via Tigli**
**I-45030 Santa Maria Maddalena, Rovigo (IT)**
Inventor: **Vecchi, Alfio**
**19, Via Martiri del Lavoro**
**I-44100 Ferrara (IT)**

(74) Representative: **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P. Barz**
**Siegfriedstrasse 8**
**D-80803 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to elastomeric thermoplastic copolyester compositions endowed with good rheological and mechanical properties and improved ageing resistance.

More particularly, the present invention relates to elastomeric thermoplastic copolyester compositions with highly satisfactory rheological and mechanical properties, improved ageing resistance and high melt viscosity, particularly suitable for being transformed into shaped articles, both by extrusion and blow-molding.

Elastomeric thermoplastic copolyesters are materials which excel in the field of rubbers due to their highly satisfactory physical and mechanical properties, such as fatigue resistance, impact resistance and oil and gasoline resistance within a broad temperature range, particularly up to 120 °C. However, they exhibit a low melt viscosity and therefore they are not suitable for being transformed into shaped articles by extrusion or blow-molding.

It is known that the melt viscosity of polyesters may be increased by solid regradation of said polymers. This process, as known, comprises heating the polymer in the solid state, at a temperature above the boiling points of the glycols present in the polymeric chain. Thus, in the case of polybutylene terephthalate (PBT) and of polyethylene terephtalate (PET), said temperature is about 180 to 220 °C.

In the case of elastomeric thermoplastic copolyesters, which have melting points near or lower than the boiling points of the glycols present therein, said regradation process cannot advantageously be carried out, since it involves melting or sintering of the polymer.

In order to overcome said drawback, the regradation process should be carried out at temperatures lower than 150 °C; however, in this case the time required to reach the desired viscosities is very long, such as, for example, 30 to 50 days. Therefore, this process cannot be carried out on an industrial level.

It is known, furthermore, that the elastomeric thermoplastic copolyesters exhibit poor resistance to thermo-oxidation, hydrolysis and light.

In order to improve the resistance to hydrolysis of the ester groups as well as the resistance to thermo-oxidation and light, it is known from US-A-3,193,522 and 3,193,524 to add polycarbodiimides.

These compounds, however, are effective only to a certain extent, since the low molecular weight polycarbodiimides are readily extracted by solvents or mineral oils,have a tendency to migrate to the surface and are ineffective at high temperatures because they tend to undergo polymerization, thereby destroying the reactivity of the carbodiimide group and thus the stabilizing action thereof.

Other carbodiimides such as, for example, those containing other functional groups (such as hydroxy) have been proposed as stabilizing agents; however, also these compounds are capable of reacting with themselves, and often their activity is lost after the storage thereof.

To overcome all the above drawbacks, it has been proposed the use, as stabilizers for copolyesters, polycarbodiimides having a molecular weight of at least 500 and having at least 3 carbodiimide groups in the molecule (see US-A-3,193,522).

However, the mechanical properties of the thus obtained polyesters again are not completely satisfactory for well specified uses wherein a high stability to thermo-oxidation and hydrolysis as well as a high melt viscosity are required, as in the case of blow-molding.

It has now surprisingly been found that all of the above drawbacks can be overcome and elastomeric thermoplastic copolyesters exhibiting improved rheological and mechanical properties and high resistance to ageing may be obtained, if a stabilizing system composed of a synergistic mixture of a polycarbodiimide and a quinolinic antioxidant is added to said copolymers.

Examples of suitable quinolinic antioxidants are those of general formula (I):

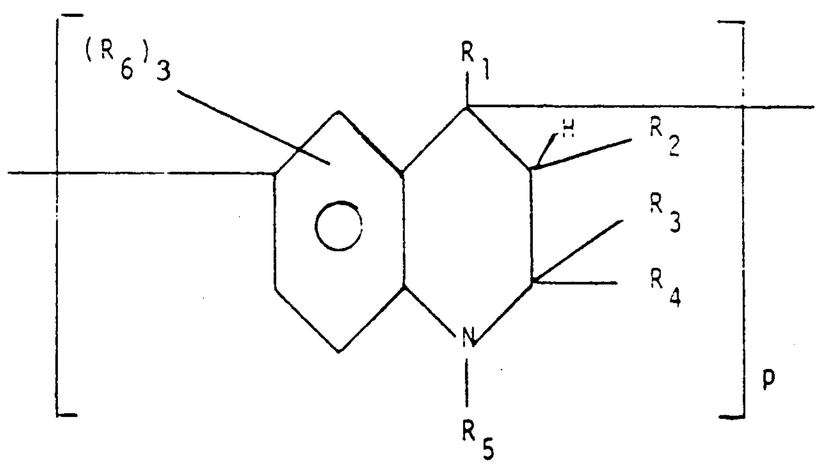

(I)

wherein:

$R_1$, $R_3$, $R_4$ and $R_5$, identical or different from each other, represent hydrogen or an alkyl radical containing from 1 to 4 carbon atoms (e.g. methyl, ethyl, n- and i-propyl);

$R_2$ is hydrogen, an alkyl radical containing from 1 to 4 carbon atoms (for examples see above) or a phenyl radical;

$R_6$ is independently selected from hydrogen, an alkyl radical containing from 1 to 4 carbon atoms (see the above examples), an aromatic radical containing from 6 to 18 carbon atoms (e.g. phenyl, naphthyl etc.), a cycloaliphatic radical containing from 3 to 6 carbon atoms (e.g. cyclopentyl and cyclohexyl), halogen (e.g. F, Cl, Br and I), or hydroxy ;

and

$\underline{p}$ is an integer of from 2 to 20 and preferably from 2 to 10.

Furthermore, it has been found that the copolyesters containing the above synergistic system, when subjected to a heat treatment in the solid state at a temperature lower than 150 °C, undergo a quick regradation, accompanied by a significant increase of the melt viscosity and a further improvement of the mechanical properties, particularly in terms of tensile strength, tear strength and resistance to thermooxidation, hydrolysis, oils and gasoline. This improvement of the mechanical properties cannot be found in the copolyesters as such or in combination with other stabilizing agents.

Subject matter of the present invention are, therefore, elastomeric thermoplastic copolyester compositions containing an effective amount of a stabilizing system composed of a synergistic mixture of a polycarbodiimide and a quinolinic antioxidant (particularly of the above general formula (I)).

The amount of the stabilizing system generally ranges from 0:01 to 10% by weight with respect to the elastomeric copolyester, and preferably is from 0.2 to 5% by weight.

The weight ratio of polycarbodiimide to quinolinic antioxidant in the stabilizing system can be varied within a broad range although ratios higher than 1 are preferred; a polycarbodiimide/quinolinic antioxidant weight ratio of about 2:1 is particularly advantageous.

According to a preferred embodiment of the present invention, the elastomeric thermoplastic copolyesters containing the above stabilizing system are subjected to a heat treatment at a temperature lower than 150 °C in air, preferably at temperatures of from 100 to 140 °C, and for 2 to 100 hours, preferably 4 to 50 hours and particularly 4 to 15 hours.

Any polycarbodiimide may be used according to the present invention. Particularly suitable are those described in US-A-3,193,522; 2,941,983; 3,929,733; 3,193,524; and 3,522,303, the contents of which are an integral part of the present description.

Particularly preferred are the aromatic polycarbodiimides of the following general formula (II):

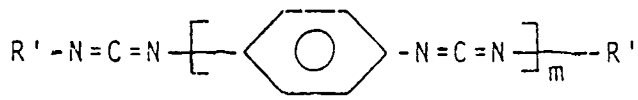

(II)

wherein:

R′ is cyclohexyl or phenyl, optionally substituted with one or more groups selected from $(C_{1-6})$-alkyl, $(C_{1-6})$-alkoxy and halogen, and

m is an integer of from 10 to 150.

These compounds are known on the market as, for example, STABAXOL(R) P 100 (RHEIN-CHEMIE RHEINAU GmbH).

Any known quinolinic antioxidant of, e.g., formula (I) may be used in the stabilizing system employed according to the present invention.

However, the quinolinic antioxidants having formula (III) are particularly preferred for achieving the objects of the present invention:

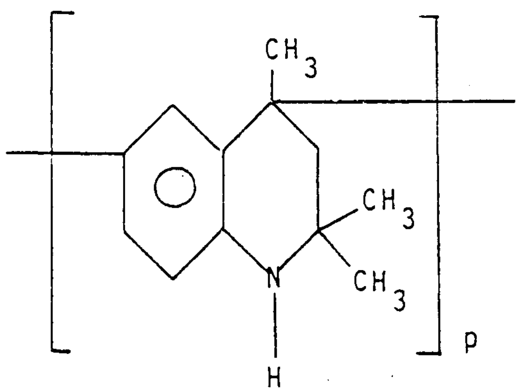

(III)

wherein p is an integer of from 2 to 10.

These antioxidants are known on the market under the trade name ANOX(R) HB (ENICHEM SINTESI S.p.A. Pedrengo (BG), Italia).

Any elastomeric thermoplastic copolyester containing ester bonds of formula:

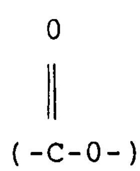

may be stabilized by the synergistic mixtures of the present invention, provided that said polyesters exhibit a softening or melting temperature not higher than 250 °C, which is the temperature above which the stabilizing system is not effective any more.

Elastomeric thermoplastic copolyesters having a segmented structure are, however, particularly preferred. These elastomeric thermoplastic copolyesters show a multiplicity of repeating long-chain and short-chain ester units connected to each other in head-to-tail fashion through linkages of the ester type. Said long-chain ester units may be represented by the general formula (IV):

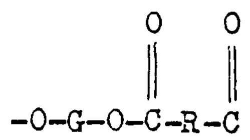 (IV)

and said short-chain units may be represented by the general formula (V):

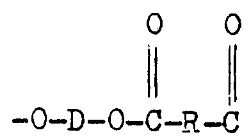 (V)

wherein:

- G is a divalent radical remaining after the removal of the hydroxyl end groups from a poly(alkylene oxide)glycol having a molecular weight of from 250 to 6,000 and a carbon/oxygen ratio of 1.8 to 4.3;
- R is a divalent radical remaining after the removal of the carboxyl groups from a dicarboxylic acid having a molecular weight lower than 300; and
- D is a divalent radical remaining after the removal of the hydroxyl groups from a diol having a molecular weight lower than 250.

In said copolyesters the short-chain ester units having the above formula (V) are usually present in an amount of about 15 to 95% by weight, and preferably 33 to 86% by weight, with respect to the weight of the copolyester, the remaining part being constituted by long-chain ester units having the above formula (IV).

Said elastomeric copolyesters are well known and described, e.g. in US-A-3,023,192 and 3,651,015; IT-A-947,589; 963 304 and 973,059; and EP-A-0349962.

The term "long-chain ester units" relates to the reaction product of a poly(alkylene oxide) glycol and a dicarboxylic acid, which product shows ester units represented by the above formula (IV).

Examples of suitable poly(alkylene oxide) glycols are those containing from 2 to 10 carbon atoms in the alkylene radical, such as poly-(1,2- and 1,3-propylene oxide)-glycol, poly-(tetramethylene oxide)-glycol, poly-(pentamethylene oxide)-glycol, poly-(hexamethylene oxide)-glycol, poly-(heptamethylene oxide)-glycol, poly-(octamethylene oxide)-glycol, poly-(nonamethylene oxide)-glycol, poly-(decamethylene oxide)-glycol, and poly-(1,2-butylene oxide)-glycol; OH terminated polybutene-1-polybutadiene and random copolymers or block copolymers of ethylene oxide and 1,2-propylene oxide.

Poly-(tetramethylene oxide)-glycol is particularly preferred in the present invention.

The term "short-chain ester units" relates to the reaction product of a diol having a low molecular weight (lower than 250) and a dicarboxylic acid, which product has ester units represented by the above formula (V).

Among suitable diols having a low molecular weight which react in order to form short-chain ester units, there are non-cyclic, alicyclic and aromatic di-hydroxy compounds. Diols of from 2 to 15 carbon atoms such as ethylene-glycol, propylene-glycol, isobutylene-glycol, tetramethylene-glycol, pentamethylene-glycol, 2,2-dimethyl-trimethylene-glycol, hexamethylene-glycol, decamethylene glycol, di-hydroxycyclohexane, cyclohexane-dimethanol, resorcinol, hydroquinone and 1,5-di-hydroxy-naphthalene, are preferred.

Particularly preferred are aliphatic diols containing from 2 to 8 carbon atoms.

Examples of aromatic di-hydroxy compounds which may also be used are bisphenols, such as bis-(p-hydroxy)-diphenyl, bis-(hydroxyphenyl)-methane, and bis-(p-hydroxyphenyl)-propane.

The term "low molecular weight diols" used in the present context should hence be understood as including all of the derivatives suitable for forming esters, provided that the requirement regarding the molecular weight relates only to the parent diol, and not to the derivatives thereof.

1,4-Butane-diol is particularly preferred for the purposes of the present invention.

The dicarboxylic acids which may be reacted with the above poly(alkylene oxide) glycols and diols having a low molecular weight in order to produce the preferred copolyesters to be employed according to the present invention are aliphatic, cycloaliphatic and/or aromatic dicarboxylic acids having a low molecular weight, i.e., having a molecular weight lower than 300. The term "dicarboxylic acids" also encompasses

equivalent derivatives of dicarboxylic acids which show a behavior substantially similar to that of the dicarboxylic acids in the reaction with glycols and diols for the formation of the copolyester polymers. These equivalent compounds include esters and ester-forming derivatives, such as, e.g., halides and anhydrides. However, the molecular weight requirement relates only to the acid, and not to its ester equivalents or other derivatives suitable for forming esters.

Therefore, the definition of "dicarboxylic acid" also covers esters of dicarboxylic acids having a molecular weight higher than 300, or equivalents of a dicarboxylic acid having a molecular weight higher than 300, provided that the corresponding acid has a molecular weight lower than 300. The dicarboxylic acids may contain any substitutent group whatsoever, or any combination of substituent groups which do not interfere to a significant extent with the formation of the copolyester polymer and with the use of the polymer in the end product according to the present invention.

Within the context of the present invention, by aliphatic dicarboxylic acids those carboxylic acids are meant that contain two carboxylic groups, each of said carbocylic groups being bonded to a saturated carbon atom. If the carbon atom to which the carboxylic group is bonded is saturated and is present within a ring, the acid is cycloaliphatic. Generally, aliphatic acids or cycloaliphatic acids containing an unsaturation of the conjugated type cannot be used, as they are liable to homopolymerize. However, certain unsaturated acids, such as, e.g., maleic acid, may be used.

In the instant context, aromatic dicarboxylic acids are those dicarboxylic acids which contain two carboxylic groups, each carboxylic group being bonded to a carbon atom of an isolated or condensed aromatic ring structure. It is not necessary that both of said carboxylic groups be bonded to the same aromatic ring, and, when more than one ring is present in the molecule, said rings may be linked by aliphatic or aromatic divalent radicals, or by divalent radicals such as, e.g., -0- or $-S0_2-$, or even by a single bond.

Examples of aliphatic and cycloaliphatic dicarboxylic acids which may be used according to the present invention are sebacic acid, 1,3-cyclohexane-dicarboxylic acid, 1,4-cyclohexane-dicarboxylicacid, adipic acid, glutaric acid, succinic acid, oxalic acid, azelaic acid, diethyl-malonic acid, allyl-malonic acid, 4-cyclohexene-1,2-dicarboxylic acid, 2-ethyl-suberic acid, 2,2,3,3-tetramethyl-succinic acid, cyclopentane-dicarboxylic acid, decahydro-1,5-naphthalene-dicarboxylic acid, 4,4′-dicyclohexyl-dicarboxylic acid, decahydro-2,6-naphthalene-dicarboxylic acid, 4,4′-methylene-bis-(cyclohexyl)-carboxylic acid, 3,4-furan-dicarboxylic acid and 1,1-cyclobutane-dicarboxylic acid.

Cyclohexane-dicarboxylic acid and adipic acid are preferred dicarboxylic acids.

Examples of aromatic dicarboxylic acids which may be used comprise phthalic acid, isophthalic acid, terephthalic acid, dibenzoic acid, dicarboxylic compounds substituted with two benzene rings, such as, e.g., bis-(para-carboxy-phenyl)-methane, para-oxy-(para-carboxy-phenyl)-benzoic acid, ethylene-bis-(para-oxy-benzoic acid), 1,5-naphthalene-dicarboxylic acid, 2,6-naphthalene-dicarboxylic acid, 2,7-naphthalene-dicarboxylic acid, phenanthrolene-dicarboxylic acid, anthralene-dicarboxylic acid, 4,4′-sulfonyl-dibenzoic acid and their $C_1$-$C_{12}$ -alkyl derivatives and derivatives resulting from substitution on the ring, such as, e.g., halogenated derivatives, alkoxy derivatives, and aryl derivatives.

Aromatic acids containing a hydroxyl group, such as, e.g., para-($\beta$-hydroxy-ethoxy)-benzoic acid, may also be used, provided that an aromatic dicarboxylic acid is also present.

The aromatic dicarboxylic acids constitute a preferred class for the preparation of the copolyester polymers employed in the present invention.

Among the aromatic acids, those which contain from 8 to 16 carbon atoms are preferred; particularly preferred are the phenylene-dicarboxylic acids, i.e., phthalic acid, isophthalic acid and terephthalic acid. Most preferred is terephthalic acid, alone or in admixture with isophthalic acid.

Preferably, at least about 70% by mol of the dicarboxylic acid included in the polymer are constituted by terephthalic acid, i.e., about 70% of the "R" groups in the above formulae (IV) and (V) are preferably 1,4-phenylene radicals.

Usually, the carboxylic acids and their derivatives and the polymeric glycols are included in the end product in the same molar proportions in which they are contained in the reaction mixture. In this case the amount of low-molecular weight diol actually included in the end product corresponds to the difference between the mols of diacid and the mols of polymeric glycol contained in the reaction mixture.

The most preferred copolyesters of the present invention are those which are prepared from dimethyl terephthalate (DMT), 1,4-butanediol (BD), and polytetramethylene-glycol (PTMG) having a molecular weight of from 250 to 2,000.

The polymers of the present invention may suitably be prepared by means of a normal transesterification reaction. A preferred process consists in heating, at 150 to 230 °C, an ester of the dicarboxylic acid (for example the dimethyl ester of terephthalic acid) with the poly(alkylene oxide) glycol

and a molar excess of the diol in the presence of a catalyst. Preferably the amount of diol is at least the 1,1-fold,and particularly at least 1,5-fold,of the diol theoretically required per mole of acid.

The heating is continued until the removal of methanol is essentially complete.

The molecular weight of the resulting prepolymer is then increased by distilling off the excess of the low molecular weight diol (polycondensation). During this distillation, a further transesterification occurs, which leads to an increase in molecular weight and to a random distribution of the various copolyester units in the molecule.

In order to avoid an excessively long dwell time of the polymer at high temperature, with the possibility of an irreversible thermal degradation, catalysts for the ester interchange reaction may advantageously be employed. While a wide variety of catalysts may be used, the organic titanates, such as, e.g., titanium tetrabutylate, either alone or in combination with magnesium or calcium acetates, are preferred. Also complex titanates derived from alkali or alkaline-earth metal alkoxides and esters of titanic acid may be efficient. Inorganic titanates, such as lanthanum titanate, mixtures of calcium acetate and antimony dioxide, and lithium and magnesium alkoxides are further examples of catalysts which may be used.

The ester interchange polymerizations are generally carried out in the molten state, but inert solvents may also be used to facilitate the removal of volatile components from the mass at low temperatures.

During the preparation of the elastomeric thermoplastic copolyester it is a conventional measure to add a stabilizer in order to prevent an oxidative degradation of the reagents and of the polymer during its shaping. The known phenolic stabilizers may be used for this purpose.

The synergistic mixture of polycarbodiimide and quinolinic stabilizer (e.g. of formula (I)) may be added to the copolyester either during the polycondensation reaction, at the end of said reaction when the copolyester is in the molten state again, or after said reaction in a separate step by re-melting the copolyester. The synergistic mixture may be added, in the form of a solid, a liquid (in the molten state) or in solution or dispersion, to one or more of the reagents. Generally it is advantageous to add the synergistic mixture in solid form to the finished copolyester by melt blending.

In this case, it is preferred to prepare a master batch of the stabilizer, for example showing an amount of synergistic mixture of 20 to 40% by weight, and then to dilute this master batch with the pure copolyester. This blending may be carried out in an extruder at a temperature of from 150 to 280 °C, depending on the particular type of copolyester. The extruder may be of the single-screw or double-screw type, preferably equipped with venting, or a Banbury mixer. The copolyesters stabilized by the synergistic mixture according to the present invention exhibit a high resistance to thermooxidation, hydrolysis and light. Furthermore, when said stabilized copolyesters are subjected to a heat treatment at a temperature lower than 150 °C, such as, for example, at 100 to 140 °C, they undergo a surprising increase of the melt viscosity(which indicates an increase of the molecular weight) without any degradation.

The heat treatment involves, moreover, a significant improvement of the mechanical properties such as tensile strength, tear strength, fatigue strength and the like.

Owing to these peculiar properties, the stabilized copolyesters of the present invention may find use for producing hydraulic pipes, coatings for cables, elastic supports for bumpers, bellows for covering joints or couplings, composite gaskets to be used at high temperatures, etc.

The charactistics of the copolyesters of the present invention may be further modified by the introduction of various conventional inorganic fillers, such as, e.g., carbon black, silica gel, alumina, clay and fiberglass. In general, the effect of these additives is to increase the modulus of the material, but at the expense of elongation, tear strength and abrasion resistance.

Besides the above, the product may be rendered flame-resistant (UL 94 Class: V2, VO, etc.) by the addition of various flame-retarding systems containing aromatic halides, or of more recent types of flame-retarding systems containing aliphatic halides or containing no halogen atoms, preferably in amounts ranging from 15 to 45% by weight, based on the end product. The materials according to the present invention, to which the last two types of cited flame-retarding systems are added, have better flame behaviour characteristics than those of the traditional segmented thermoplastic copolyesters, and are capable of passing the "Steiner 20 Foot Tunnel Test" as prescribed by UL 910, and may be given a rating of VO in the "vertical test" according to UL 94.

As flame-retarding systems, there may be used conventional ones, e.g., decabromo-bisphenol A and $Sb_2O_3$ (e.g. in a ratio of 1.5:1) or new types of flame-retarding substances such as melamine hydrobromide (see EP-A-0200217) combined with $Sb_2O_3$ (e.g. in a ratio of 3:1) or, finally, synergistic systems not containing halogen atoms, such as acidic piperazine pyrophosphate combined with melamine phosphate, e.g. in a ratio of from 3:1 to 1:1 (EP-A-0126454).

The present copolyesters, stabilized and rendered flame-resistant by the addition of the above products, show an optimum combination of characteristics in terms of:

- possible speed of extrusion of sheaths;
- aesthetic appearance;
- (low) smoke value;
- (high) oxygen index;
- (low) development rate of the flame; and
- (absence of) dripping during the combustion.

The following examples are to illustrate the present invention. Unless indicated otherwise all parts, proportions and parameters are by weight.

Examples 1 - 4

Dimethylterephthalate, optionally isophthalic acid, 1,4-butane-diol, poly(tetramethylene) glycol (PTMG) having different molecular weights and of the type and in the amounts listed in Table I were placed in an autoclave equipped with distillation column, variable-speed stirring means and temperature control system.

The temperature was gradually increased to 140° - 150° C over about 1 hour, and 150 ppm of Ti-$(OBu)_4$, previously dissolved in a few ml of butane diol (about 10 - 20 ml), were added. After a short induction period, the transesterification reaction started; said reaction being evidenced by an increase in the column overhead temperature to about 65° C, which indicated the removal of methanol. The temperature of the reaction mass was gradually increased to 250° C (over 2 hours) and was kept constant at this value until the methanol distillation was complete.

150 ppm of catalyst (titanium tetrabutylate) and about 4000 ppm of phenolic stabilizer, Irganox® 1010 (CIBA GEIGY), were added and vacuum was gradually applied until a residual pressure of about 0.05 mm Hg was reached (within about 30 minutes) and heating was continued until an internal temperature of about 250° C was reached.

When the product had reached the desired viscosity, about 200 - 6000 Pa•s at 232° C, the polymer was discharged by extrusion onto a water-cooled conveyer belt, and was chopped into small cubic granules.

The properties of the obtained copolyesters are listed in Table I.

TABLE I

| Examples | | | 1 | 2 | 3 | 4 |
|---|---|---|---|---|---|---|
| Monomers | Method | UNITS | | | | |
| Dimethylterephthalate | | | 455 | 498 | 644 | 613 |
| Isophthalic acid | | | | | | 23 |
| 1,4-Butanediol | | | 212 | 244,6 | 353 | 224 |
| PTMG (molecular weight 250) | | | | | | 263 |
| PTMG (molecular weight 650) | | | | | | 117 |
| PTMG (molecular weight 1000) | | | 530 | 477.8 | 296 | - |
| PROPERTIES | | | | | | |
| Melting point | D 2117 | °C | 182 | 191 | 209 | 160,5 |
| Glass transition temperature | DIN 53445 | °C | -60 | -50 | -12 | -41 |
| Melt index at 230°C and 2.16 kg | D 1238 | g/10' | 20 | 18 | 18 | 21 |

Example 5

The elastomeric thermoplastic copolyester of example 2 was mixed, at 190° C - 195° C and in a double-crew extruder (type MARIS M 33), with 20% by weight of the stabilizer listed in Table II. The thus obtained master batch was added to the respective pure copolymer so as to obtain compositions containing 3% by weight of stabilizer. The stabilized products were injection molded at about 200° C and the physico-mechanical properties were measured.

The obtained results are listed in the following Table II.

T A B L E II

| COPOLYESTER OF EXAMPLE 2 | | | Pure product | ANOX® HB | STABAXOL® P 100 | ANOX® HB AND STABAXOL® P100 1:2 |
|---|---|---|---|---|---|---|
| PROPERTIES | METHOD | UNITS | | | | |
| Hardness | D 2240 | Points | 46 | 46 | 46 | 46 |
| Tensile strength | D 638 | MPa | 23 | 23 | 23 | 24 |
| Elongation at break | D 638 | % | 800 | 800 | 800 | 810 |
| Melt Index at 230°C and 2.16 KG. | D 1238 | g/10' | 18 | 17 | 10 | 3.4 |
| RESISTANCE TO WATER(*) | | | | | | |
| .Tensile strength | D 638 | MPa | 16 | 16 | 17 | 24 |
| .Elongation at break | D 638 | % | 170 | 180 | 300 | 790 |
| RESISTANCE TO OIL (**) | | | | | | |
| .Tensile strength | D 638 | MPa | 19 | 20 | 22 | 24 |
| .Elongation at break | D 638 | % | 830 | 830 | 750 | 770 |

T A B L E II ( continued )

| COPOLYESTER OF EXAMPLE 2 | | | Pure product | ANOX® HB | STABAXOL® P 100 | ANOX® HB + STABAXOL® P100 1:2 |
|---|---|---|---|---|---|---|
| PROPERTIES | METHOD | UNITS | | | | |
| RESISTANCE TO THERMO-OXIDATION (***) | | | | | | |
| .Tensile strength | D 638 | MPa | 16 | 20 | 22 | 27 |
| .Elongation at break | D 638 | % | 400 | 770 | 700 | 770 |

(*) The resistance to water was determined after dipping of the sample in water at 100°C for 7 days.

(**)The resistance to oil was determined after dipping in oil ASTM N.3 at 100°C for 7 days.

(***)The resistance to thermo-oxidation was determined after standing in an oven at 121°C for 7 days.

Examples 6 - 8

By operating according to the process conditions of example 5, stabilized compositions of the copolyesters of examples 1, 3 and 4 were prepared.

The properties of the stabilized compositions thus obtained are listed in the following Table III.

TABLE III

| COPOLYESTER OF EXAMPLE | | | | | 3 | | 4 | |
|---|---|---|---|---|---|---|---|---|
| PROPERTIES | METHOD | UNITS | Pure product | ANOX(R) HB + STABAXOL P100 1:2 | Pure product | ANOX(R) HB + STABAXOL P100 1:2 | Pure product | ANAX(R) HB + STABAXOL(R) P100 1:2 |
| Tensile strength | D 638 | MPa | 19 | 20 | 34 | 35 | 18 | 19 |
| Elongation at break | D 638 | % | 800 | 850 | 700 | 720 | 850 | 870 |
| Melt Index | D 1238 | g/10' | 20 | 6 | 18 | 4.8 | 21 | 7 |
| RESISTANCE TO WATER (*) | | | | | | | | |
| . Tensile strength | D 638 | MPa | 13 | 20 | 24 | 34 | 12 | 18 |
| . Elongation at break | D 638 | % | 180 | 840 | 150 | 700 | 200 | 860 |
| RESISTANCE TO OIL (**) | | | | | | | | |
| . Tensile strength | D 638 | MPa | 17 | 21 | 28 | 36 | 16 | 20 |
| . Elongation at break | D 638 | % | 700 | 800 | 700 | 680 | 850 | 830 |

Examples 9 and 10

The stabilized copolyesters of examples 5 and 6 were subjected to a heat treatment in an air-forced oven at 125° C for 72 hours. After this treatment, the rheological properties were measured on the polymer granules and the physico-mechanical properties were measured on the products produced by injection molding at 190 - 220°C. The obtained results are given in Table IV below.

The same results were obtained when the heat treatment was carried out at a residual pressure of 3 mm Hg at 125° C for 72 hours.

TABLE IV

| COPOLYESTER OF EXAMPLE | | | 5 | 6 |
|---|---|---|---|---|
| PROPERTIES | METHOD | UNITS | | |
| Tensile strength | D 638 | MPa | 33 | 24 |
| Elongation at break | D 638 | % | 870 | 900 |
| Melt index (232°C) | D 1238 | g/10' | 0.7 | 1.5 |
| Melt viscosity | D 1238 | | | |
| at 210°C, = 10 $sec^{-1}$ | Met. B | Pa.s | 8100 | 6000 |
| at 210°C, = 100 $sec^{-1}$ | | Pa.s | 3000 | 2850 |
| at 210°C, = 1000 $sec^{-1}$ | | Pa.s | 850 | 650 |
| RESISTANCE TO WATER * | | | | |
| • Tensile strength | D 638 | MPa | 30 | 23 |
| • Elongation at break | D 638 | % | 800 | 830 |
| RESISTANCE TO OIL ** | | | | |
| • Tensile strength | D 638 | MPa | 32 | 25 |
| • Elongation at break | D 638 | % | 850 | 870 |
| RESISTANCE TO THERMO-OXIDATION *** | | | | |
| • Tensile strength | D 638 | MPa | 36 | 27 |
| • Elongation at break | D 638 | % | 780 | 830 |

The regradation properties of the stabilized copolyester of example 5 were as follows:

| TREATMENT TIME | MELT VISCOSITY a 210° C $\dot{\gamma}$ = 10 $sec^{-1}$ | TENSILE STRENGTH (MPa) | ELONGATION AT BREAK % |
|---|---|---|---|
| 0 | 2900 | 24 | 810 |
| 24 h | 5150 | 31.3 | 860 |
| 72 h | 8100 | 33 | 870 |

## Claims

### Claims for the following Contracting States : BE, DE, FR, GB, NL, SE

1. Elastomeric thermoplastic copolyester compositions, containing as stabilizer a mixture of polycarbodiimide and quinolinic antioxidant.

2. Compositions according to claim 1, wherein the quinolinic antioxidant has the general formula (I):

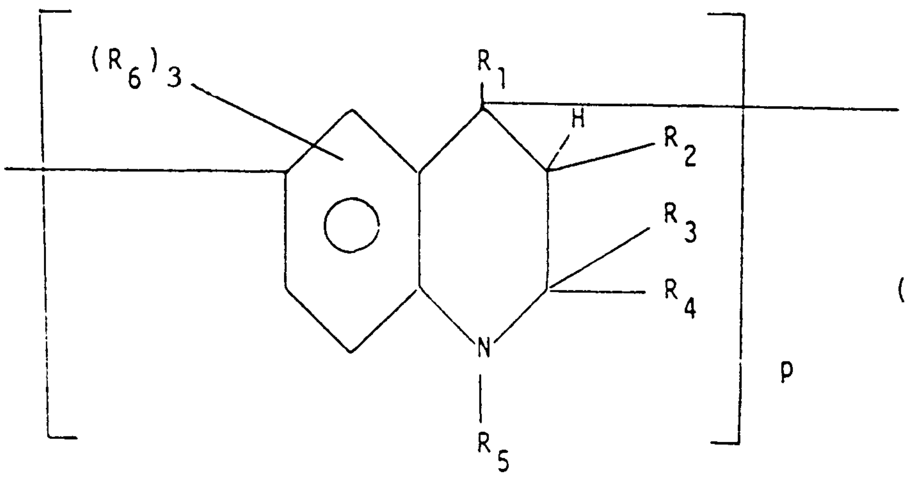

(I)

wherein:
$R_1$, $R_3$, $R_4$ and $R_5$, the same or different from each other, represent hydrogen or $(C_{1-4})$-alkyl;
$R_2$ is hydrogen, $(C_{1-4})$-alkyl or phenyl;
$R_6$ is independently selected from hydrogen, $(C_{1-4})$-alkyl, an aromatic radical containing from 6 to 18 carbon atoms, a cycloaliphatic radical containing from 3 to 6 carbon atoms, halogen or hydroxy;
and
p is an integer of from 2 to 20, particularly from 2 to 10.

3. Compositions according to claim 2, wherein the quinolinic antioxidant has the formula:

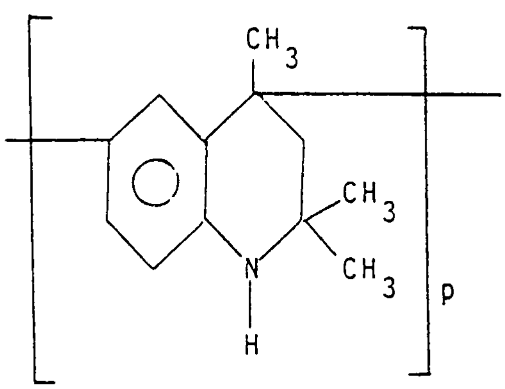

(III)

wherein p is an integer of from 2 to 10.

**4.** Compositions according to anyone of the preceding claims, wherein the polycarbodiimide has the general formula (II)

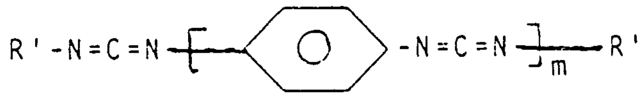

(II)

wherein:

R′ is phenyl, $(C_{1-6})$-alkyl-phenyl, $(C_{1-6})$-alkoxyphenyl, halogen-substituted phenyl or cyclohexyl; and

m is an integer of from 10 to 150.

**5.** Compositions according to anyone of the preceding claims, wherein the amount of the stabilizer is from 0.01 to 10% by weight, particularly 0.2 to 5% by weight, with respect to the elastomeric copolyester.

**6.** Compositions according to anyone of the preceding claims, wherein the weight ratio of polycarbodiimide to quinolinic antioxidant is higher than 1 and particularly is about 2.

**7.** Compositions according to anyone of the preceding claims, wherein said copolyester comprises long-chain ester units and short-chain ester units linked to each other in head-to-tail fashion through ester bonds; the long-chain ester units being represented by the general formula (IV):

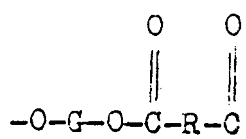

(IV)

and the short-chain ester units being represented by the general formula (V):

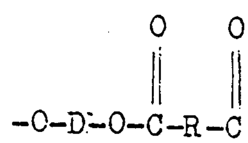

(V)

wherein:

G is a divalent radical remaining after the removal of the terminal hydroxy groups from a poly-(alkylene oxide)glycol having a molecular weight of 250 to 6000 and a carbon/oxygen ratio of 1.8 to 4.3;

R is a divalent radical remaining after the removal of the carboxyl groups from a dicarboxylic acid having a molecular weight lower than 300; and

D is a divalent radical remaining after the removal of the hydroxy groups from a diol having a molecular weight lower than 250; said short-chain ester units corresponding to formula (V) being preferably present in an amount of 15 to 95% by weight, particularly 33 to 86% by weight, with respect to the weight of the copolyester, the remaining part being constituted by long-chain ester units corresponding to formula (IV).

**8.** Compositions according to anyone of the preceding claims, which have been subjected to a heat treatment in the solid state at a temperature of less than 150° C.

**9.** Compositions according to claim 8, wherein the heat treatment is carried out at a temperature of from 100 to 140° C for 2 to 100 hours, particularly 4 to 15 hours.

**10.** Compositions according to anyone of the preceding claims, containing from 5 to 45% by weight of flame-retarding agent selected from aromatic halides, aliphatic halides and the synergistic flame-retarding systems not containing halogen atoms.

**Claims for the following Contracting State : ES**

1. A process for the manufacture of stabilized elastomeric thermoplastic copolyester compositions, characterized in that as stabilizer a mixture of polycarbodiimide and quinolinic antioxidant is added to the molten elastomeric thermoplastic copolyester.

2. The process according to claim 1, wherein the quinolinic antioxidant has the general formula (I):

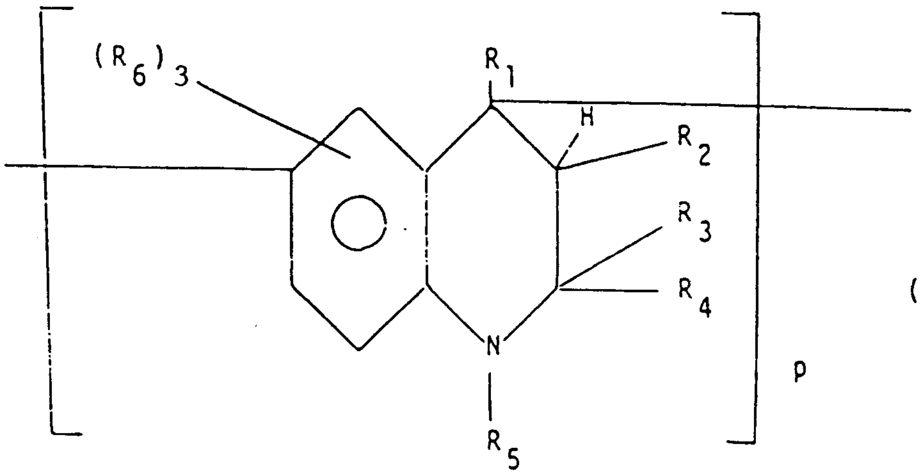

(I)

wherein:
$R_1$, $R_3$, $R_4$ and $R_5$, the same or different from each other, represent hydrogen or $(C_{1-4})$-alkyl;
$R_2$ is hydrogen, $(C_{1-4})$-alkyl or phenyl;
$R_6$ is independently selected from hydrogen, $(C_{1-4})$-alkyl, an aromatic radical containing from 6 to 18 carbon atoms, a cycloaliphatic radical containing from 3 to 6 carbon atoms, halogen or hydroxy;
and
p is an integer of from 2 to 20, particularly from 2 to 10.

3. The process according to claim 2, wherein the quinolinic antioxidant has the formula:

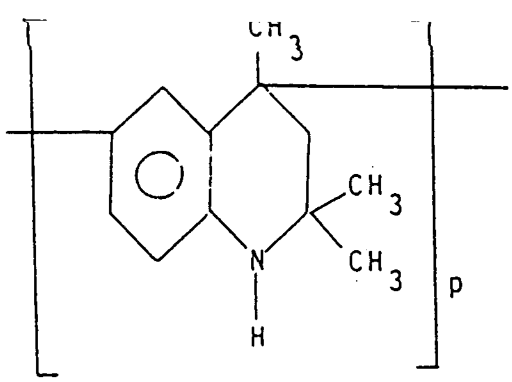

(III)

wherein p is an integer of from 2 to 10.

4. The process according to anyone of the preceding claims, wherein the polycarbodiimide has the general formula (II)

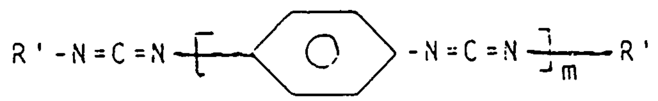

(II)

wherein:

- R' is phenyl, ($C_{1-6}$)-alkyl-phenyl, ($C_{1-6}$)-alkoxyphenyl, halogen-substituted phenyl or cyclohexyl; and
- m is an integer of from 10 to 150.

**5.** The process according to anyone of the preceding claims, wherein the amount of the stabilizer is from 0.01 to 10% by weight, particularly 0.2 to 5% by weight, with respect to the elastomeric copolyester.

**6.** The process according to anyone of the preceding claims, wherein the weight ratio of polycarbodiimide to quinolinic antioxidant is higher than 1 and particularly is about 2.

**7.** The process according to anyone of the preceding claims, wherein said copolyester comprises long-chain ester units and short-chain ester units linked to each other in head-to-tail fashion through ester bonds; the long-chain ester units being represented by the general formula (IV):

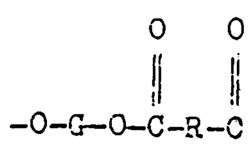

(IV)

and the short-chain ester units being represented by the general formula (V):

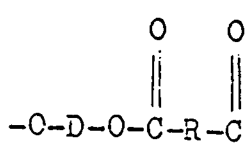

(V)

wherein:

- G is a divalent radical remaining after the removal of the terminal hydroxy groups from a poly-(alkylene oxide)glycol having a molecular weight of 250 to 6000 and a carbon/oxygen ratio of 1.8 to 4.3;
- R is a divalent radical remaining after the removal of the carboxyl groups from a dicarboxylic acid having a molecular weight lower than 300; and
- D is a divalent radical remaining after the removal of the hydroxy groups from a diol having a molecular weight lower than 250; said short-chain ester units corresponding to formula (V) being preferably present in an amount of 15 to 95% by weight, particularly 33 to 86% by weight, with respect to the weight of the copolyester, the remaining part being constituted by long-chain ester units corresponding to formula (IV).

**8.** The process according to anyone of the preceding claims, wherein the compositions are subjected to a heat treatment in the solid state at a temperature of less than 150 °C.

**9.** The process according to claim 8, wherein the heat treatment is carried out at a temperature of from 100 to 140 ° C for 2 to 100 hours, particularly 4 to 15 hours.

**10.** The process according to anyone of the preceding claims, wherein from 5 to 45% by weight of flame-retarding agent selected from aromatic halides, aliphatic halides and the synergistic flame-retarding systems not containing halogen atoms, are added.

**Patentansprüche**
**Patentansprüche für folgende Vertragsstaaten : BE, DE, FR, GB, NL, SE**

1. Elastomere thermoplastische Copolyester-Zusammensetzungen, die als Stabilisator eine Mischung eines Polycarbodiimids und eines Chinolin-Antioxidationsmittels enthalten.

2. Zusammensetzungen nach Anspruch 1, worin das Chinolin-Antioxidationsmittel die allgemeinen Formel (I) aufweist:

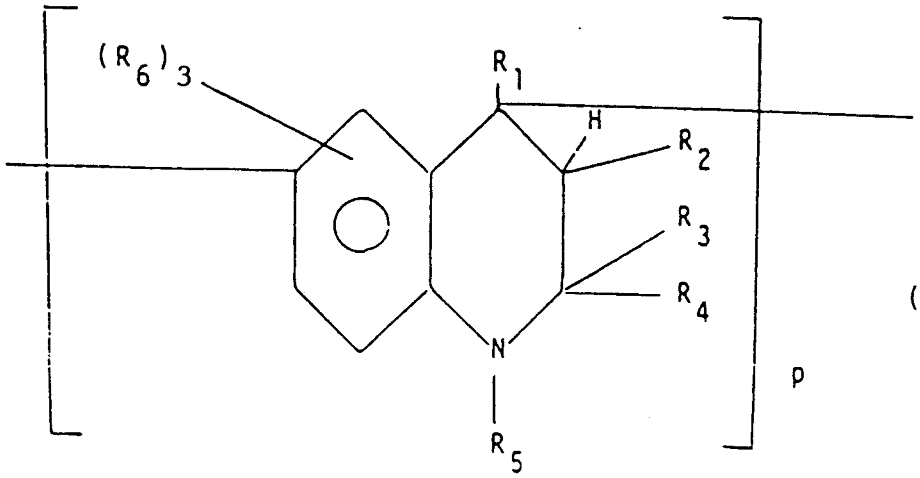

(I)

worin:
$R_1$, $R_3$, $R_4$ und $R_5$, die gleich oder verschieden sein können, Wasserstoff oder $(C_{1-4})$-Alkyl bedeuten,
$R_2$ Wasserstoff, $(C_{1-4})$-Alkyl oder Phenyl ist,
$R_6$ unabhängig ausgewählt wird aus Wasserstoff, $(C_{1-4})$-Alkyl, einer aromatischen Gruppe mit 6 - 18 Kohlenstoffatomen, einer cycloaliphatischen Gruppe mit 3 bis 6 Kohlenstoffatomen, Halogen oder Hydroxy und
p eine ganze Zahl von 2 bis 20, insbesondere von 2 bis 10 bedeutet.

3. Zusammensetzungen nach Anspruch 2, worin das Chinolin-Antioxidationsmittel die Formel:

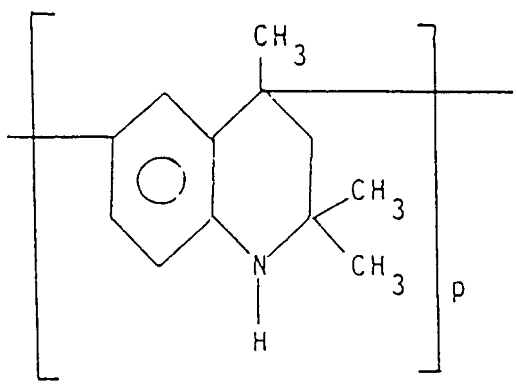

(III)

aufweist, worin p eine ganze Zahl von 2 bis 10 ist.

4. Zusammensetzungen nach einem der vorhergehenden Ansprüche, worin das Polycarbodiimid die allgemeine Formel (II) aufweist:

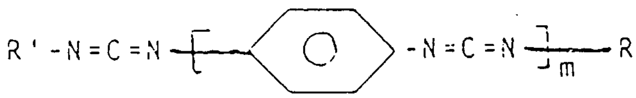

(II)

worin:

R' Phenyl, ($C_{1-6}$)-Alkylphenyl, ($C_{1-6}$)-Alkoxyphenyl, Halogensubstituiertes Phenyl oder Cyclohexyl ist und

m eine ganze Zahl von 10 bis 150 bedeutet.

**5.** Zusammensetzungen nach einem der vorhergehenden Ansprüche, worin die Menge an Stabilisator von 0,01 bis 10 Gew.-%, insbesondere von 0,2 bis 5 Gew.-%, bezogen auf den elastomeren Copolyester, beträgt.

**6.** Zusammensetzungen nach einem der vorhergehenden Ansprüche, worin das Gewichtsverhältnis von Polycarbodiimid zu Chinolin-Antioxidationsmittel höher als 1 und insbesondere etwa 2 ist.

**7.** Zusammensetzungen nach einem der vorhergehenden Ansprüche, worin der genannte Copolyester langkettige Estereinheiten und solche mit kurzer Kette umfaßt, die miteinander in Kopf-zu-Schwanz-Position über Esterbindungen verbunden sind, wobei die langkettigen Estereinheiten durch die allgemeine Formel (IV) dargestellt werden:

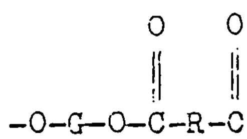

(IV)

und die Estereinheiten mit kurzer Kette durch die allgemeine Formel (V) dargestellt werden:

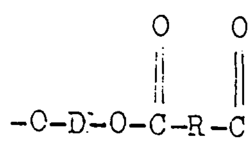

(V)

worin:

G eine zweiwertige Gruppe ist, die nach dem Entfernen der endständigen Hydroxygruppen von einem Poly(alkylenoxid)-glykol mit einem Molekulargewicht von 250 bis 6000 und einem Verhältnis von Kohlenstoff/Sauerstoff von 1,8 zu 4,3 zurückbleibt,

R eine zweiwertige Gruppe bedeutet, die nach dem Entfernen der Carboxylgruppen von einer Dicarbonsäure mit einem Molekulargewicht von weniger als 300 zurückbleibt und

D eine zweiwertige Gruppe bedeutet, die nach dem Entfernen der Hydroxygruppen von einem Diol mit einem Molekulargewicht von weniger als 250 übrigbleibt,

wobei die genannten Estereinheiten mit kurzer Kette entsprechend der Formel (V) vorzugsweise in einer Menge von 15 bis 95 Gew.-%, inbesondere von 33 bis 86 Gew.-%, bezogen auf das Gewicht des Copolyester, anwesend sind, und wobei der verbleibende Teil aus langkettigen Estereinheiten entsprechend der Formel (IV) zusammengesetzt ist.

**8.** Zusammensetzungen nach einem der vorhergehenden Ansprüche, die einer Wärmebehandlung in festem Zustand bei einer Temperatur von weniger als 150° C unterzogen wurden.

**9.** Zusammensetzungen nach Anspruch 8, worin die Wärmebehandlung bei einer Temperatur von 100 bis 140° C für eine Dauer von 2 bis 100 Stunden, insbesondere 4 bis 15 Stunden, erfolgt.

**10.** Zusammensetzungen nach einem der vorhergehenden Ansprüche, die von 5 bis 45 Gew.-% eines flammhemmenden Mittels enthalten, das ausgewählt wird aus aromatischen Halogeniden, aliphatischen Halogeniden und den synergistischen, flammhemmenden Systemen, die keine Halogenatome enthalten.

**Patentansprüche für folgenden Vertragsstaat : ES**

**1.** Verfahren zur Herstellung einer stabilisierten elastomeren thermoplastischen Copolyester-Zusammensetzung, dadurch gekennzeichnet, daß als Stabilisator eine Mischung eines Polycarbodiimids und eines Chinolin-Antioxidationsmittels zu dem geschmolzenen elastomeren thermoplastischen Copolyester zugegeben wird.

**2.** Verfahren nach Anspruch 1, worin das Chinolin-Antioxidationsmittel die allgemeinen Formel (I) aufweist:

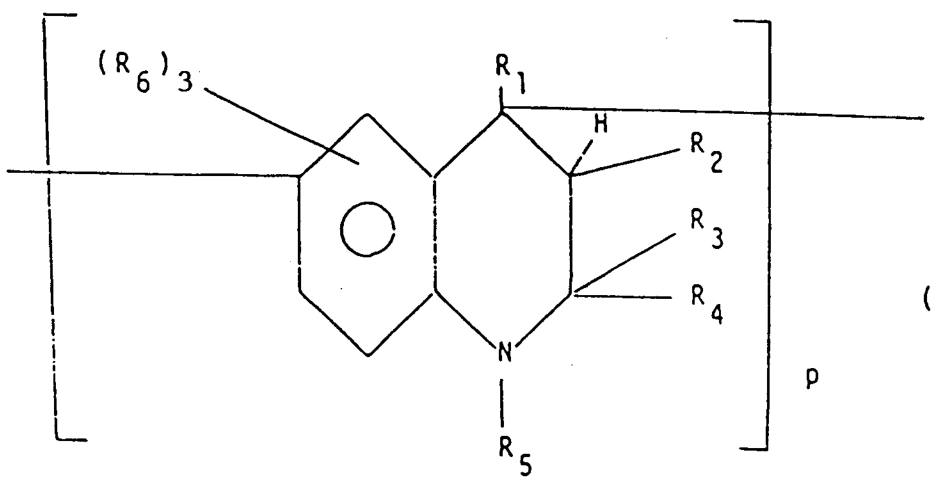

(I)

worin:
$R_1$, $R_3$, $R_4$ und $R_5$, die gleich oder verschieden sein können, Wasserstoff oder $(C_{1-4})$-Alkyl bedeuten,
$R_2$ Wasserstoff, $(C_{1-4})$-Alkyl oder Phenyl ist,
$R_6$ unabhängig ausgewählt wird aus Wasserstoff, $(C_{1-4})$-Alkyl, einer aromatischen Gruppe mit 6 - 18 Kohlenstoffatomen, einer cycloaliphatischen Gruppe mit 3 bis 6 Kohlenstoffatomen, Halogen oder Hydroxy und
p eine ganze Zahl von 2 bis 20, insbesondere von 2 bis 10 bedeutet.

**3.** Verfahren nach Anspruch 2, worin das Chinolin-Antioxidationsmittel die Formel:

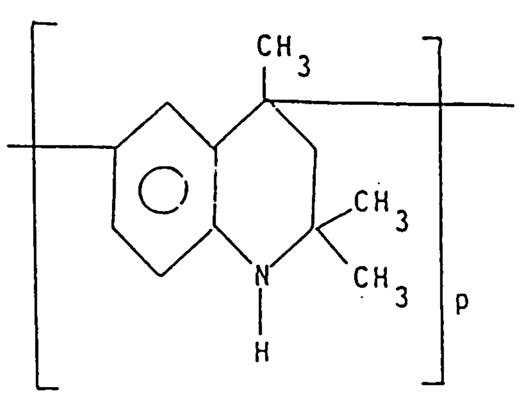

(III)

aufweist, worin p eine ganze Zahl von 2 bis 10 ist.

4. Verfahren nach einem der vorhergehenden Ansprüche, worin das Polycarbodiimid die allgemeine Formel (II) aufweist:

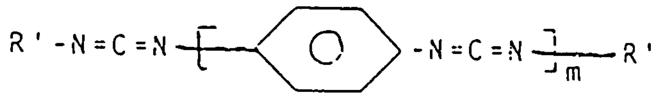

(II)

worin:

R' Phenyl, ($C_{1-6}$)-Alkylphenyl, ($C_{1-6}$)-Alkoxyphenyl, Halogensubstituiertes Phenyl oder Cyclohexyl ist und

m eine ganze Zahl von 10 bis 150 bedeutet.

5. Verfahren nach einem der vorhergehenden Ansprüche, worin die Menge an Stabilisator von 0,01 bis 10 Gew.-%, insbesondere von 0,2 bis 5 Gew.-%, bezogen auf den elastomeren Copolyester, beträgt.

6. Verfahren nach einem der vorhergehenden Ansprüche, worin das Gewichtsverhältnis von Polycarbodiimid zu Chinolin-Antioxidationsmittel höher als 1 und insbesondere etwa 2 ist.

7. Verfahren nach einem der vorhergehenden Ansprüche, worin der genannte Copolyester langkettige Estereinheiten und solche mit kurzer Kette umfaßt, die miteinander in Kopf-zu-Schwanz-Position über Esterbindungen verbunden sind, wobei die langkettigen Estereinheiten durch die allgemeine Formel (IV) dargestellt werden:

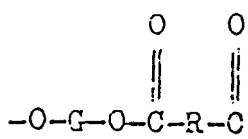

(IV)

und die Estereinheiten mit kurzer Kette durch die allgemeine Formel (V) dargestellt werden:

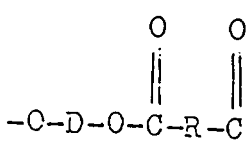

(V)

worin:

G eine zweiwertige Gruppe ist, die nach dem Entfernen der endständigen Hydroxygruppen von einem Poly(alkylenoxid)-glykol mit einem Molekulargewicht von 250 bis 6000 und einem Verhältnis von Kohlenstoff/Sauerstoff von 1,8 zu 4,3 zurückbleibt,

R eine zweiwertige Gruppe bedeutet, die nach dem Entfernen der Carboxylgruppen von einer Dicarbonsäure mit einem Molekulargewicht von weniger als 300 zurückbleibt und

D eine zweiwertige Gruppe bedeutet, die nach dem Entfernen der Hydroxygruppen von einem Diol mit einem Molekulargewicht von weniger als 250 übrigbleibt,

wobei die genannten Estereinheiten mit kurzer Kette entsprechend der Formel (V) vorzugsweise in einer Menge von 15 bis 95 Gew.-%, inbesondere von 33 bis 86 Gew.-%, bezogen auf das Gewicht des Copolyester, anwesend sind, und wobei der verbleibende Teil aus langkettigen Estereinheiten entsprechend der Formel (IV) zusammengesetzt ist.

8. Verfahren nach einem der vorhergehenden Ansprüche, worin die Zusammensetzungen einer Wärmebehandlung in festem Zustand bei einer Temperatur von weniger als 150° C unterzogen wurden.

9. Verfahren nach Anspruch 8, worin die Wärmebehandlung bei einer Temperatur von 100 bis 140° C für eine Dauer von 2 bis 100 Stunden, insbesondere 4 bis 15 Stunden, erfolgt.

10. Verfahren nach einem der vorhergehenden Ansprüche, wobei von 5 bis 45 Gew.-% eines flammhemmenden Mittels, das ausgewählt wird aus aromatischen Halogeniden, aliphatischen Halogeniden und den synergistischen, flammhemmenden Systemen, die keine Halogenatome enthalten, zugegeben werden.

**Revendications**

**Revendications pour les Etats contractants suivants : BE, DE, FR, GB, NL, SE**

1. Compositions de copolyesters élastomères thermoplastiques, contenant en tant que stabilisant, un mélange de polycarbodiimide et d'antioxydant quinoléinique.

2. Compositions suivant la revendication 1, dans lesquelles l'antioxydant quinoléinique est représenté par la formule générale (I) :

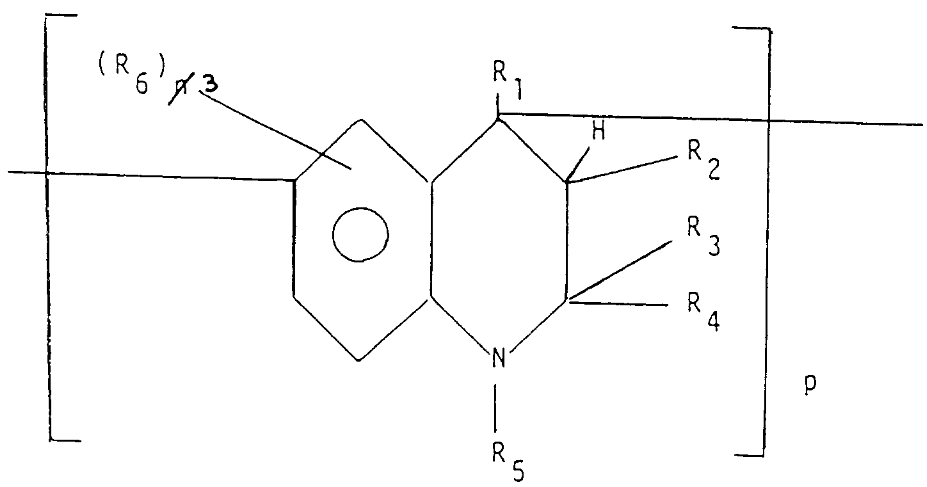

(I)

dans laquelle :

| | |
|---|---|
| $R_1$, $R_3$, $R_4$ et $R_5$, | identiques ou différents les uns des autres, représentent un atome d'hydrogène ou un groupe alkyle en $C_{1-4}$; |
| $R_2$ | est un atome d'hydrogène, un groupe alkyle en $C_{1-4}$ ou un groupe phényle; |
| $R_6$ | est indépendamment choisi parmi un atome d'hydrogène, un groupe alkyle en $C_{1-4}$, un groupe aromatique contenant 6 à 18 atomes de carbone, un groupe cycloaliphatique contenant de 3 à 6 atomes de carbone, un atome d'halogène ou un groupe hydroxy; et |
| p | est un entier de 2 à 20, en particulier de 2 à 10. |

3. Compositions suivant la revendication 2, dans lesquelles l'antioxydant quinoléinique est représenté par la formule générale (III) :

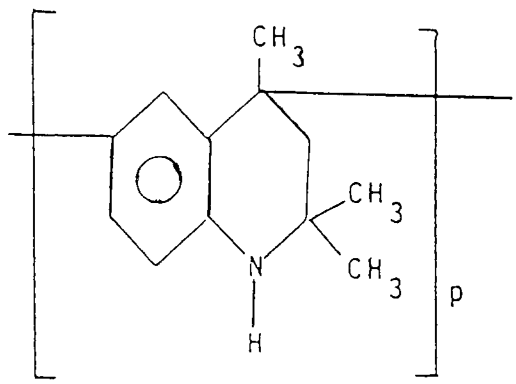

(III)

dans laquelle p est un entier de 2 à 10.

**4.** Compositions suivant l'une quelconque des revendications précédentes, dans lesquelles le polycarbodiimide est représenté par la formule générale (II) :

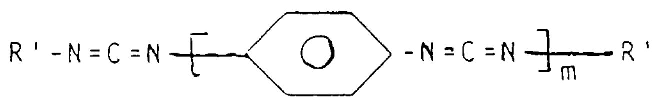

(II)

dans laquelle :

R' est un groupe phényle, phényl-alkyle en $C_{1-6}$, phényl-alcoxy en $C_{1-6}$ cyclohexyle ou, phényle halo-substitué, et

m est un entier de 10 à 50.

**5.** Compositions suivant l'une quelconque des revendications précédentes, dans lesquelles la quantité du stabilisant est comprise dans la gamme de 0,01 à 10% en poids, en particulier de 0,2 à 5% en poids par rapport au copolymère élastomère.

**6.** Compositions suivant l'une quelconque des revendications précédentes, dans lesquelles le rapport en poids du polycarbodiimide à l'antioxydant quinoléinique est supérieur à I et en particulier d'environ 2.

**7.** Compositions suivant l'une quelconque des revendications précédentes, dans lesquelles ce copolyester comprend des unités ester à longue chaîne et des unités ester à chaîne courte raccordées les unes aux autres de façon tête-à-queue par des liaisons du type ester, les unités esters à longue chaîne étant représentées par la formule générale (IV):

$$-O-G-O-\overset{O}{\overset{\|}{C}}-R-\overset{O}{\overset{\|}{C}} \qquad (IV)$$

et les unités esters à chaîne courte étant représentées par la formule générale (V) :

$$-O-D-O-\overset{O}{\overset{\|}{C}}-R-\overset{O}{\overset{\|}{C}} \qquad (V)$$

dans lesquelles :

G est un radical divalent restant après élimination des groupes hydroxy terminaux d'un poly(oxyde d'alkylène)-glycol ayant un poids moléculaire de 250 à 6.000 et un rapport carbone/oxygène de 1,8 à 4,3;

R est un radical divalent restant après élimination des groupes carboxy d'un acide dicarboxylique ayant un poids moléculaire inférieur à 300; et

D est un radical divalent restant après élimination des groupes hydroxy d'un diol ayant un poids moléculaire inférieur à 250;

ces unités esters à chaîne courte représentées par la formule (V) étant de préférence présentes en une quantité de 15 à 95% en poids, en particulier de 33 à 86% en poids, par rapport au poids du copolyester, la partie restante étant constituée par des unités esters à longue chaîne représentées par la formule (IV).

**8.** Compositions suivant l'une quelconque des revendications précédentes, qui ont été soumises à un traitement à chaud à l'état solide à une température inférieure à 150 °C.

**9.** Compositions suivant la revendication 8, dans lesquelles le traitement à chaud est effectué à une température de 100 à 140 °C pendant une période de 2 à 100 heures, en particulier de 4 à 15 heures.

**10.** Compositions suivant l'une quelconque des revendications précédentes, contenant de 5 à 45% en poids d'un agent ignifugeant choisi parmi les halogénures aromatiques, les halogénures aliphatiques et les systèmes ignifugeants synergiques ne contenant pas d'atome d'halogène.

**Revendications pour l'Etat contractant suivant : ES**

**1.** Procédé pour la fabrication de compositions stabilisées de copolyesters élastomères thermoplastiques, caractérisé en ce qu'en tant que stabilisant, un mélange de polycarbodiimide et d'antioxydant quinoléinique est ajouté au copolyester élastomères thermoplastiques fondu.

**2.** Procédé suivant la revendication 1, dans lequel l'antioxydant quinoléinique est représenté par la formule générale (I) :

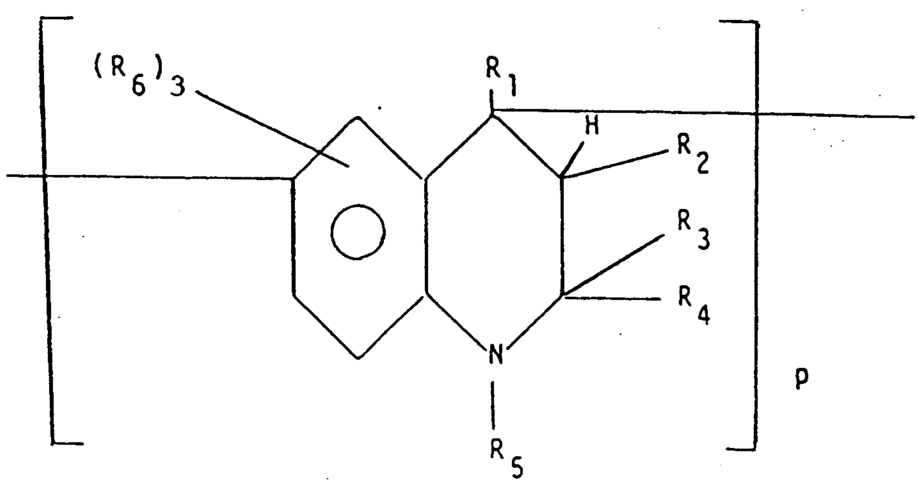

(I)

dans laquelle :

| | |
|---|---|
| $R_1$, $R_3$, $R_4$ et $R_5$, | identiques ou différents les uns des autres, représentent un atome d'hydrogène ou un groupe alkyle en $C_{1-4}$; |
| $R_2$ | est un atome d'hydrogène, un groupe alkyle en $C_{1-4}$ ou un groupe phényle; |
| $R_6$ | est indépendamment choisi parmi un atome d'hydrogène, un groupe alkyle en $C_{1-4}$, un groupe aromatique contenant 6 à 18 atomes de carbone, un groupe cycloaliphatique contenant de 3 à 6 atomes de carbone, un atome d'halogène ou un groupe hydroxy; et |
| p | est un entier de 2 à 20, en particulier de 2 à 10. |

**3.** Procédé suivant la revendication 2, dans lequel l'antioxydant quinoléinique est représenté par la formule générale (III) :

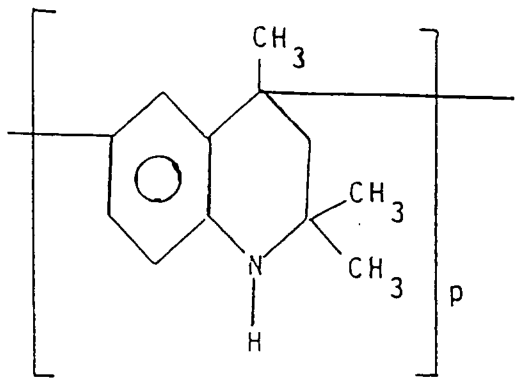

(III)

dans laquelle p est un entier de 2 à 10.

**4.** Procédé suivant l'une quelconque des revendications précédentes, dans lequel le polycarbodiimide est représenté par la formule générale (II) :

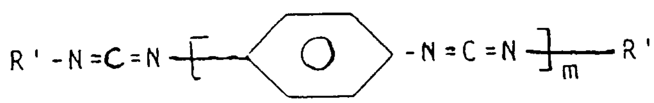

(II)

dans laquelle :

- R' est un groupe phényle, phényl-alkyle en $C_{1-6}$, phényl-alcoxy en $C_{1-6}$ cyclohexyle, ou phényle halo-substitué, et
- m est un entier de 10 à 50.

**5.** Procédé suivant l'une quelconque des revendications précédentes, dans lequel la quantité du stabilisant est comprise dans la gamme de 0,01 à 10% en poids, en particulier de 0,2 à 5% en poids par rapport au copolymère élastomère.

**6.** Procédé suivant l'une quelconque des revendications précédentes, dans lequel le rapport en poids du polycarbodiimide à l'antioxydant quinoléinique est supérieur à 1 et en particulier d'environ 2.

**7.** Procédé suivant l'une quelconque des revendications précédentes, dans lequel ce copolyester comprend des unités ester à longue chaîne et des unités ester à chaîne courte raccordées les unes aux autres de façon tête-à-queue par des liaisons du type ester, les unités esters à longue chaîne étant représentées par la formule générale (IV) :

$$-O-G-O-\overset{O}{\overset{\|}{C}}-R-\overset{O}{\overset{\|}{C}} \qquad (IV)$$

et les unités esters à chaîne courte étant représentées par la formule générale (V) :

$$-O-D-O-\overset{O}{\overset{\|}{C}}-R-\overset{O}{\overset{\|}{C}} \qquad (V)$$

dans lesquelles :

- G est un radical divalent restant après élimination des groupes hydroxy terminaux d'un poly-(oxyde d'alkylène)-glycol ayant un poids moléculaire de 250 à 6.000 et un rapport carbone/oxygène de 1,8 à 4,3;
- R est un radical divalent restant après élimination des groupes carboxy d'un acide dicarboxylique ayant un poids moléculaire inférieur à 300; et

D est un radical divalent restant après élimination des groupes hydroxy d'un diol ayant un poids moléculaire inférieur à 250;

ces unités esters à chaîne courte représentées par la formule (V) étant de préférence présentes en une quantité de 15 à 95% en poids, en particulier de 33 à 86% en poids par rapport au poids du copolyester, la partie restante étant constituée par des unités esters à longue chaîne représentées par la formule (IV).

**8.** Procédé suivant l'une quelconque des revendications précédentes, dans lequel les compositions sont soumises à un traitement à chaud à l'état solide à une température inférieure à 150 ° C.

**9.** Procédé suivant la revendication 8, dans lequel le traitement à chaud est effectué à une température de 100 à 140 ° C pendant une période de 2 à 100 heures, en particulier de 4 à 15 heures.

**10.** Procédé suivant l'une quelconque des revendications précédentes, dans lequel il est ajouté une quantité de 5 à 45% en poids d'un agent ignifugeant choisi parmi les halogénures aromatiques, les halogénures aliphatiques et les systèmes ignifugeants synergique ne contenant pas d'atome d'halogène.